# EUROPEAN PATENT APPLICATION

(11) **EP 1 182 895 A1**
(43) Date of publication of application: **27.02.2002**
(21) Application number: 01301709.0
(22) Date of filing: 26.02.2001
(51) Int. Cl.: H04Q 7/28

(54) **Method and apparatus for performing a voice dispatch call in a digital communication system**

(30) Priority: 15.08.2000 US 639448
(71) Applicant: LUCENT TECHNOLOGIES INC., Murray Hill, New Jersey 07974-0636 (US)
(72) Inventor: Strom, Kenneth Wayne, Naperville, Illinois 60565 (US); Wilson, Randall Joe, Naperville, Illinois 60540-6312 (US)
(74) Representative: Watts, Christopher Malcolm Kelway, Dr.

(57) **Abstract**

The present invention provides a method and apparatus for performing a voice dispatch call in a digital communication system, such as a spread spectrum communication system. A dispatch group that includes a plurality of communication units is established at a dispatch server. A virtual connection is established for each mobile unit that is active. A dispatch call is initiated when an originating mobile unit sends a dispatch request that is received at the dispatch server. A radio channel is established with each of the active mobile units in the dispatch group. The originating mobile unit then sends voice data that is received by the dispatch server. The voice data can be buffered at the originating mobile unit or the dispatch server. The dispatch server then distributes a portion of the voice data to the active mobile units in the dispatch group utilizing the radio channel.

## Description

### Field of the Invention

The present invention relates generally to digital communication systems, and more particularly to a method and apparatus for performing a voice dispatch call in a digital communication system.

### Background of the Invention

Typical cellular communications are user-to-user calls. In these cellular calls, a first cellular user dials the directory number of a second user, who can be a cellular user or a landline user. Assuming the second user answers the call, a full duplex communication takes place, where both the first user and the second user can send and receive voice signals to the other user. These voice signals can be sent and received at the same time.

Dispatch systems are typically one-to-many communications. A dispatch call is typically initiated by a dispatcher who initiates a dispatch call to a group of users of the system. The communication in a dispatch call is typically simplex or half-duplex, where the voice data travels in s single direction, typically from the dispatcher to the group of users.

It has been difficult to effectively implement a dispatch call on packet voice communication systems, such as a digital spread spectrum cellular communication system. One difficulty has been the access time required to set up a voice dispatch call in a digital cellular communication system. This access time is often in the two second range, which frustrates users and makes the use of dispatch communications less desirable. The access time is typically in this range because of the time it takes to determine the mobile units that are trying to be contacted by the dispatch call, establishing a radio channel with each of these mobile units, and then alerting the originating dispatch mobile unit that the dispatch call is ready.

A second problem that has been encountered in trying to establish dispatch calls on digital communication systems is poor resource utilization. In digital cellular communication systems, full-duplex bandwidth must be reserved for each of the mobile units who are being called in the dispatch call. This reservation of full-duplex bandwidth occurs even though the receiving mobile units are acting in half-duplex or simplex mode.

Therefore, a need exists for a method and apparatus for increased performance in establishing a voice dispatch call in a digital communication system.

### Summary of the Invention

It is an object of the present invention to provide a method and apparatus for improving the establishment of a voice dispatch call in a digital communication system.

The method and apparatus of the present invention includes a dispatch group that includes a plurality of mobile units. A dispatch server is coupled to a packet data network, which in turn is coupled to a wireless access network. The wireless access network communicates via radio frequency (RF) with mobile units.

The dispatch server includes the dispatch group. The dispatch server establishes a virtual connection for each of the plurality of mobile units that are active. An originating mobile unit makes a request for a dispatch call for the dispatch group. This dispatch request can be by pressing a dedicated button on the mobile unit, such as a push-to-talk button, or by pressing a predetermined key sequence which indicates that a dispatch call is desired. As used herein, the term "dispatch call" refers to a one-to-many communication wherein a single communication unit initiates voice data that is played substantially simultaneously to a group of users.

The dispatch server establishes a radio channel with each of the active mobile units in the dispatch group. The dispatch server is aware of the location of each of the active members of the dispatch group and will establish a radio channel for each of them, even if the active mobile unit has roamed from the original site in which they were located.

The originating mobile unit transmits voice data to the wireless access network. The wireless access network sends the voice data to the packet data network, which in turn sends the voice data to the dispatch server. The dispatch server distributes the voice data to each of the active members of the dispatch group over the radio channels.

One feature of the present invention is that the voice data is preferably buffered prior to distribution. The buffering preferably occurs at the dispatch server, but can alternately be buffered at the originating mobile unit. The originating mobile unit will indicate a dispatch request, and during the time that the call setup is occurring the mobile unit will be receiving the voice data from the user of the originating mobile unit.

By buffering voice data and removing a portion of the buffered packets prior to sending to recipients in the dispatch group, perceived delays can be minimized or virtually eliminated. It is a feature of the present invention that only a portion of the buffered voice data is eventually transmitted to the members of the dispatch group. The device that stores the voice data will analyze the voice packets to determine if consecutive packets contain similar characteristics. One example of a characteristic is silence, or any other sound that is substantially similar to the previous voice packet. A processor in the storing device then removes the packet that has similar characteristics to the previous voice packet.

In this manner, the speech data is compressed by shortening the number of packets sent to the members of the dispatch group. By removing selected packets, the delay that is normally experienced when simply delaying transmission of voice data is minimized by decreasing the amount of data that is ultimately transmitted. If the original voice data is buffered for two seconds, but two seconds worth of voice packets are not transmitted, the last packet transmitted will substantially coincide with the transmission from the originating mobile unit. In this manner, the delay is minimized or eliminated between the time that the originating mobile unit ceases transmission and the time that another member of the dispatch group responds to the originating mobile unit.

It is a feature of the present invention that the radio channel is maintained after the ceasing of transmission of voice data by the originating mobile unit. This is accomplished by setting a timer at the dispatch server that keeps the radio channel active for the dispatch call after the originating mobile unit dekeys. This allows the other active members of the dispatch group to respond to the dispatch group without having to go through all of the steps necessary to setup a dispatch call. When the timer expires, the resources required to maintain the dispatch call are released.

Thus, the present invention provides an improved method and apparatus for performing a voice dispatch call in a digital communication system.

### Brief Description of the Drawings

FIG. 1 depicts a digital cellular communication system including a wireless access network, a packet data network, and a dispatch server in accordance with the preferred embodiment of the present invention.
FIG. 2 depicts the dispatch server of FIG. 1 in accordance with the preferred embodiment of the present invention.
FIG. 3 depicts a flowchart of a method for performing a voice dispatch call at a dispatch server in accordance with the preferred embodiment of the present invention.

### Description of the Preferred Embodiment(s)

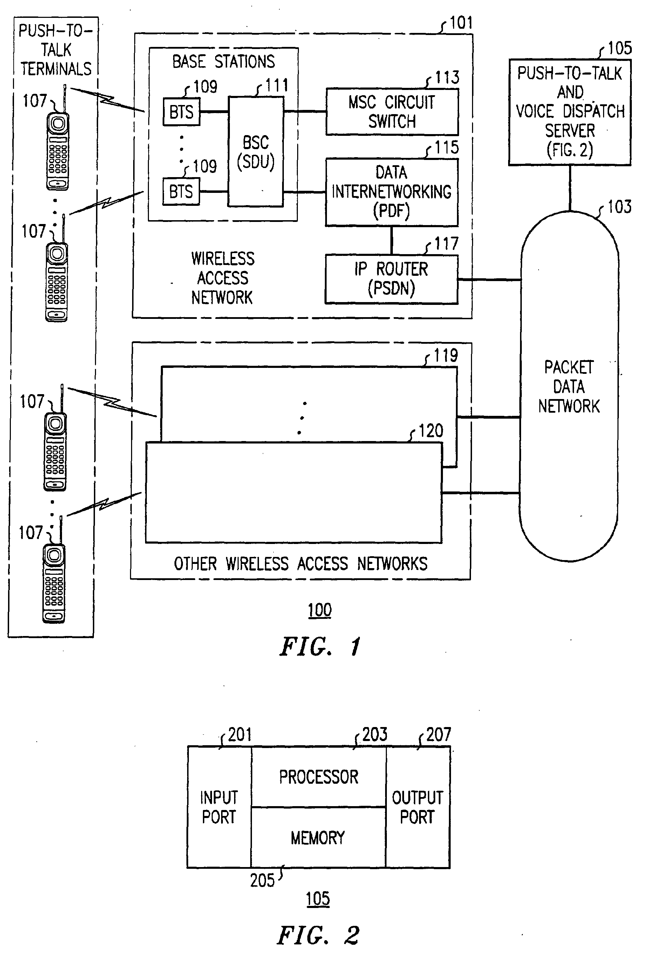

FIG. 1 depicts a digital cellular communication system 100 including a wireless access network 101, a packet data network 103, and a dispatch server 105 in accordance with the preferred embodiment of the present invention. Communication system 100 is preferably a Code Division Multiple Access (CDMA) system, but can alternately be any packet-based air interface technology. Utilizing the present invention, communication system 100 is effective in performing a voice dispatch call. A plurality of mobile units 107 are depicted and are in communication with wireless access network 101. FIG. 1 also shows additional wireless access networks that can be coupled to packet data network 103, and can have additional mobile units coupled thereto.

Wireless access network 101 preferably includes a plurality of base transceiver stations 109. Base transceiver stations 109 are preferably coupled to and controlled by a base station controller (BSC) 111. BSC 111 can be a Signal Distribution Unit (SDU) or the like. BSC 111 is preferably coupled to an MSC Circuit Switch 113 and a Data Interworking function 115. Data Interworking Function 115 is preferably coupled to IP router 117.

Wireless access network 101 is effective in communicating with mobile units 107. Wireless access network 101 is effective in receiving a dispatch request from an originating mobile unit and a data packet from the originating mobile unit. Wireless access network 101 is also effective in transmitting the dispatch request and the data packet to packet data network 103. Wireless access network 101 communicates with mobile units 107 utilizing known RF techniques.

Packet data network 103 is coupled to wireless access network and 101 and is effective in receiving the dispatch request and the data packet from wireless access network 101. Packet data network 103 can be an internet or an intranet utilizing the Internet Protocol (IP). Packet data network can be coupled to other packet data networks, not shown, and other wireless access networks 119-120.

Dispatch server 105 is depicted in greater detail in FIG. 2 below.

FIG. 2 depicts the dispatch server 105 of FIG. 1 in accordance with the preferred embodiment of the present invention. Dispatch server 105 preferably includes an input port 201, a processor 203, memory 205, and an output port 207. Input port 201 and output port 207 can physically be located in the same device.

Input port 201 is effective in coupling to packet data network 103. Input port 201 is effective in receiving a dispatch request from an originating mobile unit in a dispatch group. The dispatch request is transmitted from the originating mobile unit to a BTS, which routes the message through the BSC to the Data Interworking function. The Data Interworking function forwards the message to the IP router, which in turn sends the message to dispatch server 105 through packet data network 103.

Input port 201 is effective in receiving the data packet from the originating mobile unit. Input port 201 is also effective in receiving an indication that the originating mobile unit has completed transmitting voice data. This indication can be a digital signal, a subaudible tone, or an audible signal. Either way, the signal alerts dispatch server 105 that the originating mobile unit has ceased transmission of voice data. This is typically done by releasing a button on the mobile unit, such as a push-to-talk button or the like.

Processor 203 is effective in establishing a dispatch group. The dispatch group comprises a plurality of mobile units. Processor 203 is also effective in establishing a virtual connection for each of the plurality of mobile units that are active and establishing a radio channel with each of the active mobile units in the dispatch group. Processor 203 is effective in receiving voice data from the originating mobile unit.

In the preferred embodiment, processor 203 removes selected packets, such as silence or duplicate packets, from the buffered data prior to distributing the voice data over the output port.

Processor 203 is also effective in tracking the location of a mobile unit in the dispatch group. This allows the dispatch server to know where all mobile units in the dispatch group are located, and thereby to alert each mobile unit in a dispatch group when a new dispatch call is being initiated.

Processor 203 is also effective in keeping the radio channel active after receiving the indication that the originating mobile unit has completed transmitting voice data and starting a dormancy timer upon reception of the indication that the originating mobile unit has completed transmitting voice data. Processor 203 releases the radio channel upon expiration of the dormancy timer.

Memory 205 is effective in storing a dispatch group. The dispatch group comprises a plurality of communication units, which can include mobile units and fixed units, such as landline telephones.

In the preferred embodiment of the present invention, voice data received from the originating mobile unit is buffered. Buffering the voice data allows for a perceived shortening of the access and delay time. This is preferably done at dispatch server 105, but can alternately be accomplished in memory located within the originating mobile unit.

In the preferred embodiment, the voice data from the originating mobile unit is stored within memory. The buffering occurs while the communication system is setting up the dispatch call to all active users in the dispatch group. When the call setup is completed, the voice data is retrieved from the buffer. Without further processing, such storage and retrieval would simply delay the transmission of the voice data. However, utilizing the preferred embodiment of the present invention, the voice data is altered after storage but prior to transmission.

A processor, preferably processor 203 in dispatch server 105, evaluates the voice data packets to determine which voice data packets can be removed. This can be done by removing voice packets that comprise mostly silence. Alternately, this can be accomplished by removing voice packets that are duplicates of previous voice packets. In this manner, the voice data is compressed prior to transmission. Utilizing compression in this manner allows the voice data sent from the originating mobile unit to be received by the plurality of communication units in the dispatch group without a perceived delay. The delay is not perceived by the plurality of units in the dispatch group because, although the transmission of the first voice packet received from the originating mobile unit is delayed, the removal of selected voice data packets from the buffered voice data allows the transmission of the voice data to catch up to the actual transmission by the originating mobile unit. If the duration of the original transmission by the originating mobile unit is long enough, the voice data will not need to be buffered at all, and the complete, uncompressed voice data can be transmitted.

Output port 207 is coupled to packet data network 103 and is effective in distributing the voice data to the active mobile units in the dispatch group. The distribution of the voice data preferably occurs by utilizing the radio channel.

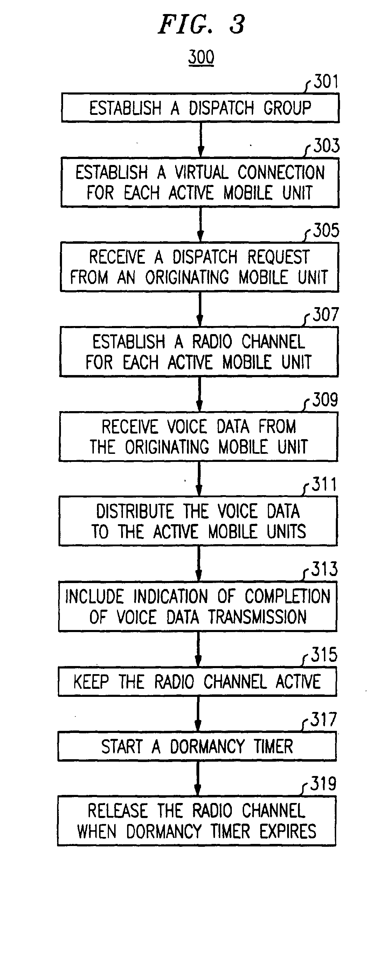

FIG. 3 depicts a flowchart 300 of a method for performing a voice dispatch call in a digital communication system in accordance with the preferred embodiment of the present invention. The digital communication system preferably includes a wireless access network, a packet data network coupled to the wireless access network, and a dispatch server coupled to the packet data network.

A dispatch server establishes (301) a dispatch group. The dispatch group preferably comprises a plurality of mobile units that register with the dispatch server, preferably on power up of the mobile unit. The dispatch group can also include fixed communication units, such as landline telephones and fixed terminals, such as dispatch terminals.

A virtual connection is established (303) for each mobile unit in the dispatch group that is active. The virtual connection is established when a mobile unit registers. The virtual connection is a virtual circuit that includes routing information for the mobile unit.

A dispatch request is received (305) from an originating mobile unit. The originating mobile unit is a mobile unit in the dispatch group. The dispatch request is preferably received at the dispatch server. The dispatch request preferably includes an identification of the originating mobile unit and an indicator of the dispatch group that the mobile unit is attempting to establish a dispatch call with. A mobile unit can be a member of multiple dispatch groups.

In the preferred embodiment of the present invention, a user of the originating mobile unit initiates the dispatch call by pushing a button on the mobile unit. This is preferably a dedicated button, commonly referred to as a push-to-talk button, that is used to make dispatch calls. Alternately, the user of the originating mobile unit can initiate a dispatch call by depressing a predetermined call sequence. This call sequence would include a code to indicate that a dispatch call is being initiated, such as *123, and an indication of the dispatch group that is being contacted. For example, the user could press *123 on the keypad of the mobile unit, and then press 456 to originate a dispatch call to the dispatch group having a dispatch group code of 456.

A radio channel is established (307) with each of the active mobile units in the dispatch group. The RF resources are allocated when the dispatch call occurs. It takes approximately one to two seconds to establish the radio channel with each of the active mobile units.

Voice data is received (309) from the originating mobile unit. The voice data is preferably in the form of packets that preferably include one voice sample each. The voice data is received by the dispatch server.

To increase the effectiveness of dispatch calls, the effective access time of the dispatch call is decreased utilizing the preferred embodiment of the present invention. In the preferred embodiment, the voice data is buffered. Buffering can occur at the mobile unit or at the dispatch server. In the embodiment wherein the voice data is buffered at the originating mobile unit, the voice data is buffered prior to transmission from the originating mobile unit to the dispatch server. In the embodiment wherein the voice data is buffered at the dispatch server, the voice data is buffered after reception of the voice data at the dispatch server. In either embodiment, the voice data is buffered prior to distribution from the dispatch server to the active mobile units in the dispatch group.

The present invention shortens the effective access time of the voice dispatch call by removing selected data packets from the voice data prior to distribution by the dispatch server to the active mobile units in the dispatch group. The selected data packets are preferably those that exhibit a similarity across a plurality of successive packets. For instance, if a string of successive packets exhibit similar characteristics, a portion of these packets can be removed prior to transmission. Since the packets exhibit similar characteristics, the effect on the output speech perceived by a dispatch group user will be minimal.

As an example of the preferred embodiment of the present invention, the user of the originating mobile unit may have periods of silence in his original speech. When this original speech is converted to data packets, these periods of silence in the speech should exhibit similar characteristics. If there are 20 successive packets that exhibit this similar characteristic, silence in this case, a portion of these packets could be removed prior to transmission to the dispatch group. In the preferred embodiment of the present invention, all of the silent packets are removed from the queue. In an alternate embodiment, every fifth packet is removed and not transmitted. By doing this, the number of packets transmitted has been reduced by four.

Utilizing this embodiment of the present invention, the effective and perceived access and delay times are reduced. The originating mobile unit or the dispatch server will buffer voice data during the time that the call setup is occurring. As soon as the call setup is complete, the buffered voce data will be transmitted to the dispatch group. Since a portion of the buffered packets will not be transmitted, the duration of the transmitted data is less than the duration of the original data. Consequently, the end of the transmitted voice data will be closer in time to the end of the origination of voice data than the beginning of the transmission of the voice data was to the beginning of the transmission of the originating data.

As an example, assume that the call setup time is two seconds and that the originating dispatch user speaks ten seconds of voice data. Without removing voice data packets from the buffered data, the transmission of the voice packets would be delayed two seconds. The start of the transmission of the voice data packets would be two seconds after the start of the speech, and the end of the transmission of the voice packets would be two seconds after the originating user stopped speaking.

However, utilizing the preferred embodiment of the present invention, and assuming the same call setup time and voice data time, the start of the transmission of voice data packets would be delayed two seconds. Assuming that one second of buffered voice data is removed in accordance with the preferred embodiment of the present invention, nine seconds of voice data is transmitted to the dispatch group. Consequently, the start of the transmission of the voice data packets would be two seconds after the start of the speech, but the end of the transmission of the voice packets would only be one second after the originating user stopped speaking. This would thereby lessen the delay time for those in the dispatch group who respond to the originating mobile unit for this dispatch group. An additional benefit of the present invention is that it reduces network resources required to serve these customers.

The dispatch server then distributes (311) the voice data to the active mobile units in the dispatch group. This is preferably done utilizing the radio channel. In the preferred embodiment, the voice data is distributed from the dispatch server utilizing the Transmission Control Protocol/Internet Protocol (TCP/IP). Alternately, any of several protocols can be used to distribute the voice data, such as the User Datagram Protocol/Internet Protocol (UDP/IP).

In the preferred embodiment of the present invention, an indication that the originating mobile unit has completed transmitting voice data is included (313). This indication can be audible, visual, or any other indication that alerts other members of the dispatch group that the originating mobile unit has stopped transmitting data. This is preferably indicated when the user of the originating mobile unit releases the button that was depressed to initiate the dispatch call. Audible tones can include a tone, a beep, a squelch tone, or any other audible indication that the originating mobile unit has ceased transmitting. The visual indication can be a data signal sent to each of the active members of the dispatch group that indicates to the mobile unit that a visual indicator, such as a light or the like, should be lit.

The dispatch server preferably keeps (315) the radio channel active after receiving the indication that the originating mobile unit has completed transmitting voice data. This is done to allow other members of the dispatch group to continue this dispatch call without having to go through the steps to set up a dispatch call.

The dispatch server preferably starts (317) a dormancy timer upon reception of the indication that the originating mobile unit has completed transmitting voice data. This timer is set for the length of time that the dispatch server keeps the radio channel active after the current originating mobile unit has completed transmitting voice data. The length of the dormancy timer can be selected by the administrator of the communication system, and in the alternate embodiment has a length of between about 0 and six seconds. In the case where the dormancy timer is set to zero seconds, the timer will not be set, and the radio channel and the associated resources will be released upon the release of the push to talk button or the like by the originating mobile unit. In the preferred embodiment, the first group member to respond gets control of the radio channel, and other members who later respond are denied access until the radio channel is freed up again.

If the dormancy timer expires prior to one of the members of the dispatch group keying and transmitting voice data, the dispatch server releases (319) the radio channel.

Thus, the present invention provides a method and apparatus that solves a problem associated with the prior art. The present invention provides a method and apparatus for performing a voice dispatch call in a digital communication system. By utilizing voice packets, dispatch calls on digital communication systems, such as digital spread spectrum communication systems, are provided.

In addition, by buffering the voice packets prior to distribution to a dispatch group, delay times can be lessened. By removing similar, redundant, or quiet packets prior to distribution, the end of the dispatch call occurs closer in time to the end of the original transmission than the beginning of the distribution is to the beginning of the dispatch call. This provides for less delay time in responses to the original dispatch call, which alleviates the problems associated with relatively lengthy setup times that exist in the prior art.

Although the preferred embodiment of the present invention depicted the dispatch call originator being from a mobile unit, the originating dispatch unit can alternately be a landline telephone that is connected to a server that converts the speech into packets for dispatch processing.

While this invention has been described in terms of certain examples thereof, it is not intended that it be limited to the above description, but rather only to the extent set forth in the claims that follow.

## Claims

1. A method for performing a voice dispatch call in a digital communication system including a wireless access network, a packet data network coupled to the wireless access network, and a dispatch server coupled to the packet data network, the method comprising:
establishing a dispatch group at the dispatch server, the dispatch group comprising a plurality of mobile units;
establishing a virtual connection for each of the plurality of mobile units that are active;
receiving a dispatch request from an originating mobile unit;
establishing a radio channel with each of the active mobile units in the dispatch group, the radio channel utilizing the virtual connection;
receiving voice data from the originating mobile unit; and
distributing the voice data from the dispatch server to the active mobile units in the dispatch group utilizing the radio channel.

2. A method for performing a voice dispatch call in accordance with claim 1, the method further comprising the step of buffering the voice data prior to distributing the voice data.

3. A method for performing a voice dispatch call in accordance with claim 2, wherein the step of buffering the voice data is done at the originating mobile unit.

4. A method for performing a voice dispatch call in accordance with claim 2, wherein the step of buffering the voice data is done at the dispatch server.

5. A method for performing a voice dispatch call in accordance with claim 2, wherein the voice data comprises a plurality of data packets, the method further comprising the step of removing selected data packets from the voice data prior to the step of distributing.

6. A method for performing a voice dispatch call in accordance with claim 5, wherein the step of removing selected data packets from the voice data comprises the step of distributing a portion of the buffered voice data to the active mobile units in the dispatch group.

7. A method for performing a voice dispatch call in accordance with claim 1, the method further comprising the step of tracking the location of a mobile unit in the dispatch group.

8. A method for performing a voice dispatch call in accordance with claim 1, the method further comprising the step of including an indication that the originating mobile unit has completed transmitting voice data.

9. A method for performing a voice dispatch call in accordance with claim 8, the method further comprising the step of keeping the radio channel active after receiving the indication that the originating mobile unit has completed transmitting voice data.

10. A method for performing a voice dispatch call in accordance with claim 8, further comprising the step of starting a dormancy timer upon reception of the indication that the originating mobile unit has completed transmitting voice data.

11. A method for performing a voice dispatch call in accordance with claim 10, further comprising the step of releasing the radio channel upon expiration of the dormancy timer.

12. A method for performing a voice dispatch call in accordance with claim 1, wherein the step of distributing the voice data from the dispatch server is accomplished utilizing the Transmission Control Protocol/Internet Protocol.

13. A method for performing a voice dispatch call in accordance with claim 1, wherein the step of distributing the voice data from the dispatch server is accomplished utilizing the User Datagram Protocol/Internet Protocol.

14. A method for performing a voice dispatch call in a digital communication system including a dispatch server, the method comprising the steps of:
registering a dispatch group with the dispatch server, the dispatch group including a plurality of mobile units;
establishing a virtual connection for each of the plurality of mobile units upon power up of the mobile unit;
keying an originating mobile unit in the dispatch group to indicate a dispatch request, the dispatch request indicating that the originating mobile unit is attempting to establish a dispatch call with the dispatch group;
receiving the dispatch request at the dispatch server;
establishing a radio channel with each of the powered-up mobile units in the dispatch group;
transmitting voice data from the originating mobile unit to the dispatch server;
receiving the voice data at the dispatch server; and
distributing the voice data from the dispatch server to the dispatch group utilizing the radio channel for each of the powered-up mobile units in the dispatch group.

15. A method for performing a voice dispatch call in accordance with claim 14, the method further comprising the step of buffering the voice data prior to distributing the voice data.

16. A method for performing a voice dispatch call in accordance with claim 15, wherein the step of buffering the voice data is done at the originating mobile unit.

17. A method for performing a voice dispatch call in accordance with claim 15, wherein the step of buffering the voice data is done at the dispatch server.

18. A method for performing a voice dispatch call in accordance with claim 15, wherein the voice data comprises a plurality of data packets, the method further comprising the step of removing selected data packets from the voice data prior to the step of distributing.

19. A method for performing a voice dispatch call in accordance with claim 18, wherein the step of removing selected data packets from the voice data comprises the step of distributing a portion of the buffered voice data to the powered-up mobile units in the dispatch group.

20. A method for performing a voice dispatch call in accordance with claim 14, the method further comprising the step of including an indication that the originating mobile unit has completed transmitting voice data.

21. A method for performing a voice dispatch call in accordance with claim 20, the method further comprising the step of keeping the radio channel active after receiving the indication that the originating mobile unit has completed transmitting voice data.

22. A method for performing a voice dispatch call in accordance with claim 20, further comprising the step of starting a dormancy timer upon reception of the indication that the originating mobile unit has completed transmitting voice data.

23. A method for performing a voice dispatch call in accordance with claim 22, further comprising the step of releasing the radio channel upon expiration of the dormancy timer.

24. A dispatch server in a digital communication system, the dispatch server comprising:
an input port effective in coupling to a packet data network, the input port being effective in receiving a dispatch request;
a processor effective in:
establishing a dispatch group comprising a plurality of mobile units;
establishing a virtual connection for each of the plurality of mobile units that are active;
establishing a radio channel with each of the active mobile units in the dispatch group, the radio channel utilizing the virtual connection; and
receiving voice data from the originating mobile unit;
memory effective in storing a dispatch group; and
an output port coupled to a packet data network and effective in distributing the voice data to the active mobile units in the dispatch group utilizing the radio channel.

25. A dispatch server in accordance with claim 24, wherein the dispatch server buffers the voice data in the memory prior to distributing the voice data over the output port.

26. A dispatch server in accordance with claim 25, wherein the processor removes silence from the buffered data prior to distributing the voice data over the output port.

27. A dispatch server in accordance with claim 24, wherein the processor tracks the location of a mobile unit in the dispatch group.

28. A dispatch server in accordance with claim 24, wherein the input port is effective in receiving an indication that the originating mobile unit has completed transmitting voice data.

29. A dispatch server in accordance with claim 28, wherein the processor keeps the radio channel active after receiving the indication that the originating mobile unit has completed transmitting voice data.

30. A dispatch server in accordance with claim 28, wherein the processor starts a dormancy timer upon reception of the indication that the originating mobile unit has completed transmitting voice data.

31. A dispatch server in accordance with claim 30, wherein the processor releases the radio channel upon expiration of the dormancy timer.

32. A digital communication system for performing a voice dispatch call, the digital communication system comprising:
a wireless access network effective in communicating with a plurality of mobile units, the wireless access network effective in receiving a dispatch request from an originating mobile unit and a data packet from the originating mobile unit and transmitting the dispatch request and the data packet to a packet data network;
a packet data network coupled to the wireless access network and effective in receiving the dispatch request and the data packet from the wireless access network; and
a dispatch server coupled to the packet data network, the dispatch server comprising:
an input port effective in coupling to a packet data network, the input port being effective in receiving the dispatch request from the originating mobile unit in a dispatch group and the data packet from the originating mobile unit;
a processor effective in:
establishing a dispatch group comprising a plurality of mobile units;
establishing a virtual connection for each of the plurality of mobile units that are active;
establishing a radio channel with each of the active mobile units in the dispatch group; and
receiving the data packet from the originating mobile unit;
memory effective in storing the dispatch group; and
an output port coupled to the packet data network and effective in distributing the voice data to the active mobile units in the dispatch group utilizing the radio channel.

33. A digital communication system for performing a voice dispatch call in accordance with claim 32, wherein the dispatch server buffers the voice data in the memory prior to distributing the voice data over the output port.

34. A digital communication system for performing a voice dispatch call in accordance with claim 33, wherein the processor removes silence from the buffered data prior to distributing the voice data over the output port.
